# EUROPEAN PATENT SPECIFICATION

(11) **EP 3 273 662 B1**
(45) Date of publication and mention of the grant of the patent: **09.10.2019**
(21) Application number: 15886102.1
(22) Date of filing: 24.11.2015
(51) Int. Cl.: H04L 29/08

(54) **DATA ACQUISITION DEVICE, AND DATA SHARING METHOD AND SYSTEM THEREOF**
DATENERFASSUNGSVORRICHTUNG UND VERFAHREN ZUR GEMEINSAMEN DATENNUTZUNG UND SYSTEM DAFÜR
DISPOSITIF D'ACQUISITION DE DONNÉES, ET PROCÉDÉ ET SYSTÈME DE PARTAGE DE DONNÉES ASSOCIÉS

(30) Priority: 20.03.2015 CN 201510124899
(43) Date of publication of application: 24.01.2018
(73) Proprietor: Hangzhou Ezviz Network Co., Ltd., Hangzhou, Zhejiang 310051 (CN)
(72) Inventor: LEI, Yonggan, Hangzhou Zhejiang 310051 (CN); BAO, Dunqiao, Hangzhou Zhejiang 310051 (CN); JIN, Shengyang, Hangzhou Zhejiang 310051 (CN); JIANG, Haiqing, Hangzhou Zhejiang 310051 (CN); DU, Anqiang, Hangzhou Zhejiang 310051 (CN)
(74) Representative: Novagraaf Technologies
(86) International application number: PCT/CN2015/095443
(87) International publication number: WO 2016/150180

(56) References cited:
- CN-A- 1 710 938
- CN-A- 103 914 661
- US-A1- 2009 251 412
- US-A1- 2011 055 774
- US-A1- 2013 265 229
- US-A1- 2014 140 233

## Description

### Technical Field

The present disclosure relates to the field of communications, and more particularly to data acquisition equipment and a method and system for sharing data between data acquisition equipment.

### Background

In an existing data acquisition system, there may exist multiple pieces of data acquisition equipment at the same time, the multiple pieces of data acquisition equipment work independently to finish data acquisition, and at this moment, single data acquisition equipment usually acquires local data, particularly image acquisition equipment such as a motion camera. When being required to use a motion camera, a user may usually carry multiple motion cameras for acquiring images at different preset positions. At a specific moment, each motion camera acquires videos or images of the same moment but different positions. When being required to acquire the videos or images of the specific moment, the user may usually transmit videos or images shot by each motion camera to third-party equipment through an interface in a unified manner, or transmit the videos or images to a cloud through a network connection, and then manually select the videos or images of the specific moment; or after motions end, the user manually controls the motion cameras to be wirelessly connected with another motion camera or mobile terminal and selects the videos or images of the specific moment for sharing with other equipment.

Prior art document US2011/0055774A1 provides a system and method for controlling interaction between a mobile terminal and digital picture frame, wherein at least one digital picture frame is located relative to mobile terminal. Using this short-range communication, mobile terminal is able to transmit an image displayed on a screen of the terminal to the one or more digital picture frame. Prior art document US2013/0265229A1 provides a control of remote device based on gestures, which are directed toward controlling electronic devices based on hand gestures detected by detecting the topography of a portion of a user's body. However, the communications in document US2011/0055774A1 and document US2013/ 0265229A1 are one-way transmission, the above mentioned problem still remains unsolved.

For the problem of inconvenience for data sharing between data acquisition equipment in a related art, there is yet no effective solution at present.

### Summary

For the problem of inconvenience for data sharing between data acquisition equipment in the related art, there is no yet effective solution, and in view of this, a main purpose of the present disclosure is to provide data acquisition equipment and a method and system for sharing data between data acquisition equipment, to solve the problem.

In order to achieve the purpose, according to an embodiment of the present disclosure, a method for sharing data between data acquisition equipment is provided, the method including: acquiring a gravity sensing value detected in real time by first data acquisition equipment in motion, wherein the first data acquisition equipment is anyone piece of data acquisition equipment in a data acquisition equipment group; when it is detected that the gravity sensing value meets a preset condition, reading data acquired by the first data acquisition equipment according to a predetermined sharing rule; and sending the data acquired by the first data acquisition equipment according to the sharing rule to any at least one piece of second data acquisition equipment in the data acquisition equipment group, wherein there is a pre-established data transmission channel between the second data acquisition equipment and the first data acquisition equipment.

In order to achieve the purpose, according to another embodiment of the present disclosure, data acquisition equipment is provided, the data acquisition equipment including: a gravity sensor, configured to detect in real time a gravity sensing value of the data acquisition equipment in motion; a data acquisition device, configured to acquire data according to a predetermined rule; a processor, receiving the gravity sensing value detected in real time by the gravity sensor and reading the data acquired by the data acquisition device according to the predetermined rule when it is detected that the gravity sensing value is larger than or equal to a first preset threshold value; and a communication device, configured to send the data read by the processor to other data acquisition equipment through a pre-established data transmission channel.

According to embodiments of the present disclosure, when it is detected that the gravity sensing value is larger than or equal to a first preset threshold value, the data acquired by the first data acquisition equipment according to a predetermined sharing rule is read; and the data acquired by the first data acquisition equipment according to the sharing rule is sent to any at least one piece of second data acquisition equipment in the data acquisition equipment group, so that the problem of inconvenience for data sharing between the data acquisition equipment in the related art is solved, and an effect of automatically sharing the data between the data acquisition equipment according to a preset condition is further achieved.

### Brief Description of the Drawings

The drawings, forming a part of the present disclosure, are adopted to provide a further understanding to the present disclosure. Schematic embodiments of the present disclosure and descriptions thereof are adopted to explain the present disclosure and not intended to form improper limits to the present disclosure. In the drawings:
Fig. 1 is a flowchart of a method for sharing data between data acquisition equipment according to embodiment 1 of the present disclosure;
Fig. 2 is a schematic diagram of a device for sharing data between data acquisition equipment according to embodiment 2 of the present disclosure;
Fig. 3 is a structure diagram of data acquisition equipment according to embodiment 3 of the present disclosure; and
Fig. 4 is a schematic diagram of a system for sharing data between data acquisition equipment according to embodiment 4 of the present disclosure.

### Detailed Description of the Embodiments

It is important to note that the embodiments in the present disclosure and characteristics in the embodiments may be combined under the condition of no conflicts. The present disclosure will be described below in detail with reference to the drawings and the embodiments.

For making the solutions of the present disclosure better understood by those skilled in the art, the technical solutions in the embodiments of the present disclosure will be clearly and completely described below with reference to the drawings in the embodiments of the present disclosure. Obviously, the described embodiments are not all embodiments but only part of embodiments of the present disclosure. All other embodiments obtained by those skilled in the art on the basis of the embodiments in the present disclosure without creative work shall fall within the scope of protection of the present disclosure.

It is important to note that terms "first", "second" and the like in the specification, claims and drawings of the present disclosure are adopted not to describe a specific sequence or order but to distinguish similar objects. It should be understood that data used like this may be exchanged under a proper condition to facilitate descriptions made about the embodiments of the present disclosure here. In addition, terms "include" and "have" and any transformation thereof are intended to cover nonexclusive inclusions. For example, a process, method, system, product or equipment including a series of steps or units is not limited to the steps or units which are clearly listed, but may include other steps or units which are not clearly listed or intrinsic to the process, the method, the product or the equipment.

### Embodiment 1

Embodiment 1 of the present disclosure provides a method for sharing data between data acquisition equipment.

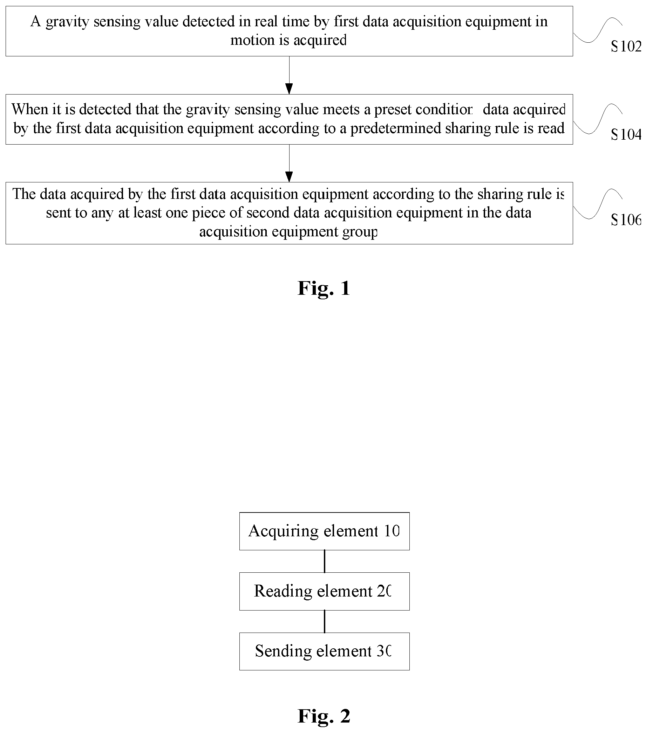

Fig. 1 is a flowchart of a method for sharing data between data acquisition equipment according to embodiment 1 of the present disclosure. As shown in Fig. 1, the method for sharing the data between the data acquisition equipment includes the following steps.

Step S102: a gravity sensing value detected in real time by first data acquisition equipment in motion is acquired, wherein the first data acquisition equipment is anyone piece of data acquisition equipment in a data acquisition equipment group.

In an example embodiment, in Step S102, the data acquisition equipment group includes at least two pieces of data acquisition equipment. When the data acquisition equipment is, for example, a motion camera, the data acquisition equipment mainly acquires image or video data in a motion process.

Step S104: when it is detected that the gravity sensing value meets a preset condition, data acquired by the first data acquisition equipment according to a predetermined sharing rule is read.

In an example embodiment, the technical solution in the embodiment of the present disclosure is clearly and completely described with the condition that the gravity sensing value meets the preset condition is, for example, that the gravity sensing value is larger than or equal to a first preset threshold value, as an example in a part of embodiments of the present disclosure. That the gravity sensing value meets the preset condition may further include that the condition that the gravity sensing value is smaller than or equal to the first preset threshold value, or the gravity sensing value is positioned in an interval or out of the interval defined by two preset threshold values or the like.

In an example embodiment, in Step S104, the preset condition is, for example, that the gravity sensing value is larger than or equal to a first preset threshold value, and in such an example, that the gravity sensing value meets the preset condition refers to that the gravity sensing value is larger than or equal to the first preset threshold value. Alternatively, the first preset threshold value may be set according to a received external input signal. The gravity sensing value in the motion process of the data acquisition equipment is detected in real time, the first preset threshold value is acquired, and the gravity sensing value detected in real time by the data acquisition equipment in motion is compared with the first preset threshold value.

In an example embodiment, the gravity sensing value includes: an acceleration value and/or a speed value.

In an example embodiment, when the gravity sensing value merely includes the acceleration value or the speed value, a standard for judging whether the gravity sensing value is larger than or equal to the first preset threshold value or not is: whether the acceleration value or the speed value is larger than or equal to the first preset threshold value or not is judged.

In an example embodiment, when the gravity sensing value includes the acceleration value and the speed value, the first threshold value includes preset threshold values corresponding to the acceleration value and the speed value respectively, and at this moment, standards for judging whether the gravity sensing value is larger than or equal to the first preset threshold value or not are as follows: the first is judging whether any one of the gravity sensing value is larger than or equal to the corresponding preset threshold value or not and determining that the gravity sensing value is larger than or equal to the first preset threshold value when any one of the gravity sensing value is larger than or equal to the corresponding preset threshold value; and the second is judging whether each of the gravity sensing value is larger than or equal to the corresponding preset threshold value or not and determining that the gravity sensing value is larger than or equal to the first preset threshold value when each of the gravity sensing value is larger than or equal to the corresponding preset threshold value. For example, the data acquisition equipment is a motion camera, the preset threshold value includes, for example, an acceleration value of 3m/s² and a speed value of 15m/s, an acceleration value and a speed value of the motion camera in a motion process are detected in real time in the motion process, the acceleration value may exceed the preset acceleration threshold value but the speed value does not exceed the preset speed threshold value in case of, for example, jumping, or the acceleration value may not exceed the preset acceleration threshold value but the speed value exceeds the preset speed threshold value in case of, for example, rapid sliding. It is determined that the gravity sensing value is larger than or equal to the first preset threshold value according to the above first judgment standard, and it is determined that the gravity sensing value is smaller than the first preset threshold value according to the above second judgment standard. Similarly, when the acceleration value exceeds the preset acceleration threshold value and the speed value exceeds the preset speed threshold value, it is determined that the gravity sensing value is larger than or equal to the first preset threshold value according to the second judgment standard. A type of the gravity sensing value to be detected and the judgment standard to be selected may both be determined according to a requirement of a practical condition. Preferably, selection of the type of the gravity sensing value or selection of the judgment standard may be implemented according to a received gravity sensing value type selection signal and judgment standard selection signal.

Step S106: the data acquired by the first data acquisition equipment according to the sharing rule is sent to any at least one piece of second data acquisition equipment in the data acquisition equipment group, wherein there is a pre-established data transmission channel between the second data acquisition equipment and the first data acquisition equipment.

In an example embodiment, in Step S106, before data transmission, the second data acquisition equipment establishes the data transmission channel with the first data acquisition equipment. The pre-established data transmission channel may be a wired or wireless channel, wherein the wireless data transmission channel is, for example, Bluetooth, Wireless Fidelity (WIFI), 3rd Generation (3G), 4th Generation (4G) and the like.

In an example embodiment, the second data acquisition equipment and the first data acquisition equipment may be of the same type. For example, the second data acquisition equipment and the first data acquisition equipment are both motion cameras, the first data acquisition equipment shares the acquired data to the second data acquisition equipment according to the abovementioned method, and similarly, the second data acquisition equipment may share acquired data to the first data acquisition equipment according to a method similar to the data acquisition and transmission method of the first data acquisition equipment. In such a manner, the first data acquisition equipment and the second data acquisition equipment have image or video data acquired by the respective camera in a continuous motion process, and also have complete data acquired by the data acquisition equipment according to the sharing rule.

In an example embodiment, the second data acquisition equipment and the first data acquisition equipment may be of different types. For example, the first data acquisition equipment is a motion camera, while the second data acquisition equipment is, for example, a mobile terminal. The mobile terminal pre-establishes a connection with the second data acquisition equipment, the first data acquisition equipment shares the acquired data to the mobile terminal according to the abovementioned method, and the mobile terminal may receive, store and even forward the received data.

In an example embodiment, the mobile terminal may forward the received data. When data transmission channels are established between every two of multiple pieces of data acquisition equipment, for example, the first data acquisition equipment is a motion camera; the second data acquisition equipment is also a motion camera, and establishes a data transmission channel with the first data acquisition equipment; and third data acquisition equipment is a mobile terminal, and establishes data transmission channels with the first data acquisition equipment and the second data acquisition equipment respectively. The first data acquisition equipment and the second data acquisition equipment mutually share the data acquired according to the abovementioned method, and the third data acquisition equipment receives the data acquired by the first data acquisition equipment and the second data acquisition equipment according to the abovementioned method. When the first data acquisition equipment or the second data acquisition equipment is confronted with relatively high pressure of processing such as data sending and receiving, the first data acquisition equipment and the second data acquisition equipment may select not to receive the data shared by the other party, and instead, share own acquired data to the mobile terminal, and the mobile terminal forwards the data shared by one party to the other party respectively.

From the above, according to the method for sharing the data between the data acquisition equipment provided by embodiment 1 of the present disclosure, automatic, intelligent and real-time data sharing between the data acquisition equipment is implemented, and the data required to be shared may be determined according to the preset sharing rule. When a piece of data acquisition equipment is, for example, a motion camera, the data, particularly exciting images acquired according to the sharing rule, may be automatically shared between the motion cameras and between the motion camera and the mobile terminal, then the exciting images shot by multiple different motion cameras may be obtained by merely one motion camera or the mobile terminal, and the multiple motion cameras are not required to be connected to third-party equipment for one-by-one copying or one-by-one downloading through a cloud, so that user experiences are improved.

In an example embodiment, before the data acquired by the first data acquisition equipment according to the predetermined rule is read, the method for sharing the data between the data acquisition equipment further includes:
Step S103: a first input signal is received, and a sharing rule corresponding to the first input signal is selected from multiple sharing rules pre-stored by multiple pieces of first data acquisition equipment.

In an example embodiment, in Step S103, before the data is acquired, a plurality of sharing rules are stored, and starting conditions and ending conditions for data acquisition of the data acquisition equipment, or data acquisition time lengths or the like may be specified in the sharing rules. For example, the sharing rules may include a first sharing rule, that is, the data is started to be acquired until the data acquisition time length reaches a preset time length when it is detected that the gravity sensing value is larger than or equal to the preset threshold value. For another example, the sharing rules may include a second sharing rule, that is, the first data acquisition equipment merely acquires data in a time period when the gravity sensing value is larger than or equal to the preset threshold value, and it may be considered that data acquisition time of the first data acquisition equipment starts from a moment when the gravity sensing value is larger than or equal to the preset threshold value and ends at a moment when the gravity sensing value is smaller than the preset threshold value in such a mode.

In an example embodiment, before reading the data acquired by the first data acquisition equipment according to the predetermined sharing rule, the method for sharing the data between the data acquisition equipment further includes:
Step S1041: a predetermined sharing rule is called by the first data acquisition equipment to acquire the data. In an example embodiment, in Step S1041, the predetermined sharing rule called by the first data acquisition may have been uniquely determined at the start, and may also be selected according to the external signal in Step S103.

In an example embodiment, Step S1041 further includes:
Step S1042: the first data acquisition equipment enters a first working mode to read a preset time period.

In an example embodiment, in Step S1042, the first data acquisition equipment enters the first working mode according to the preset sharing rule when it is detected that the gravity sensing value meets the preset condition, for example, when the gravity sensing value is larger than or equal to the preset threshold value. In an example embodiment, after entering the first working mode, the gravity sensing value detected in real time may be selected to compare with the preset threshold value in real time, the preset threshold value may be different from the first preset threshold value in Step S104 at this moment, and a specific operation of the first data acquisition equipment in the first working mode may be controlled according to a comparison result. In an example embodiment, the first data acquisition equipment may select not to compare the gravity sensing value detected in real time with the preset threshold value in real time after entering the first working mode. Preferably, the first data acquisition equipment cyclically detects whether the gravity sensing value is larger than or equal to the preset threshold value or not after quitting the first working mode, and enters the first working mode when detecting that the gravity sensing value is larger than or equal to the preset threshold value. Alternatively, the preset time period may be any preset time length, and modification, prolonging and the like may be performed on the preset time period according to the external input signal.

Step S1044: the first data acquisition equipment is controlled to acquire data in the preset time period.

In an example embodiment, in Step S1044, the first data acquisition equipment acquires the data in the preset time period according to the sharing rule called by the first data acquisition equipment at this moment. In an example embodiment, when the first data acquisition equipment is not in the first working mode and it is detected that the gravity sensing value meets the preset condition, for example, the gravity sensing value is larger than or equal to the preset threshold value, the first data acquisition equipment starts entering the first working mode and starts acquiring the data until the time length of acquiring data reaches the preset time period.

In an example embodiment, the step of controlling the first data acquisition equipment to acquire the data in the preset time period in Step S1044 includes:
Step S1045: a continuous time length of acquiring data is monitored by the first data acquisition equipment;
Step S1046: when the continuous time length of acquiring the data by the first data acquisition equipment is smaller than the preset time period, the first data acquisition equipment continues acquiring the data till an ending moment of the time period; and
Step S1047: when the continuous time length of acquiring the data by the first data acquisition equipment is larger than or equal to the preset time period, the first data acquisition equipment stops acquiring the data.

By the alternative implementation mode provided by Step S1045 to Step S1047, the first data acquisition equipment acquires the data in the preset time period, for example, when the first data acquisition equipment is a motion camera, image or video information is acquired in the abovementioned manner. The first data acquisition equipment may also acquire the data in the preset time period in another alternative manner, for example, an image acquisition device in the first data acquisition equipment, such as the motion camera, continuously acquires the image information. Because the acquired image information includes timestamps, the first data acquisition equipment may acquire, from the image acquisition device, images of which timestamps are in the preset time period according to an acquisition starting time and the preset time period.

In an example embodiment, when the gravity sensing value meets the preset condition, for example, when the gravity sensing value is larger than or equal to the preset threshold value, the step of controlling the first data acquisition equipment to acquire the data in the preset time period in Step S1044 further includes:
Step S1048: whether the gravity sensing value of the first data acquisition equipment in the preset time period is larger than or equal to a second preset threshold value or not is detected in real time, wherein the second preset threshold value is smaller than the first preset threshold value; and
Step S1049: when the gravity sensing value of the first data acquisition equipment in the preset time period is smaller than or equal to the second preset threshold value, the first data acquisition equipment stops acquiring the data.

By the solution provided by Step S1048 to Step S1049, when the first data acquisition equipment works in the first working mode, a magnitude relationship between the gravity sensing value of the first data acquisition equipment and the second preset threshold value is detected in real time. When the gravity sensing value of the first data acquisition equipment is larger than or equal to the first preset threshold value, the first data acquisition equipment enters the first working mode and continuously acquires the data in the preset time period; and at this moment, when the data acquisition equipment is in the first working mode, the gravity sensing value of the first data acquisition equipment may be smaller than the first preset threshold value. Preferably, in the solution provided by Step S1048 to Step S1049, when the first data acquisition equipment is in the first working mode, when the real-time gravity sensing value of the first data acquisition equipment is smaller than the second preset threshold value, the first data acquisition equipment may be controlled to stop acquiring the data.

In an example embodiment, in Step S104, the first data acquisition equipment enters a second working mode according to the predetermined sharing rule when it is detected that the gravity sensing value meets the preset condition, for example, the gravity sensing value is larger than or equal to the first preset threshold value. The gravity sensing value detected in real time is compared in real time with the preset condition, for example, the first preset threshold value. The first data acquisition equipment is controlled to acquire in real time data at a moment when the real-time gravity sensing value of the first data acquisition equipment meets the preset condition, for example, the gravity sensing value is larger than or equal to the first preset threshold value. and is controlled to share the acquired data to the second data acquisition equipment in real time.

In an example embodiment, before reading the data acquired by the first data acquisition equipment according to the predetermined sharing rule, the method for sharing the data between the data acquisition equipment further includes:
Step S1051: the first data acquisition equipment calls a predetermined sharing rule to acquire the data. Specifically, in Step S1051, the predetermined sharing rule called by the first data acquisition equipment may be uniquely determined at the start, and may also be selected according to the external signal in Step S103.

Step S1051 further includes:
Step S1052: the first data acquisition equipment enters the second working mode.
Step S1054: the moment when the gravity sensing value meets the preset condition is recorded, for example, the moment when the gravity sensing value is larger than or equal to the first preset threshold value.
   In an example embodiment, in Step S1054, since the gravity sensing value continuously changes under a normal condition, the moment when the gravity sensing value is larger than or equal to a first preset threshold value may be a time period with an unequal time length.
Step S1056: the first data acquisition equipment is controlled to acquire the data at the moment when the gravity sensing value meets the preset condition, for example, the data at the moment when the gravity sensing value is larger than or equal to the first preset threshold value.

In an example embodiment, in Step S1056, the first data acquisition equipment merely shares the data, acquired by the first data acquisition equipment, at the moment when the gravity sensing value is larger than or equal to the first preset threshold value. For example, when the data acquisition equipment is a motion camera, in, for example, a jumping time period t1 from the 5th second to the 8th second and an accelerated sliding time period t2 from the 39th second to the 45th second, the gravity sensing value of the first data acquisition equipment is kept larger than or equal to the first preset threshold value, and then the first data acquisition equipment shares images and data in the time periods t1 and t2 to the other motion camera or the mobile terminal.

### Embodiment 2

Embodiment 2 of the present disclosure also provides a device for sharing data between data acquisition equipment. It is important to note that the device for sharing the data between the data acquisition equipment in the embodiment of the present disclosure may be configured to execute a method for sharing the data between the data acquisition equipment provided by the embodiment of the present disclosure, and the method for sharing the data between the data acquisition equipment may also be executed by the device for sharing the data between the data acquisition equipment provided by the embodiment of the present disclosure.

Fig. 2 is a schematic diagram of a device for sharing data between data acquisition equipment according to embodiment 2 of the present disclosure. As shown in Fig. 2, the device for sharing the data between the data acquisition equipment includes:
an acquiring element 10, configured to acquire a gravity sensing value detected in real time by first data acquisition equipment in motion, wherein the first data acquisition equipment is anyone piece of data acquisition equipment in a data acquisition equipment group, and the data acquisition equipment group includes at least two pieces of data acquisition equipment.

In an example embodiment, the data acquisition equipment group includes at least two pieces of data acquisition equipment. When the data acquisition equipment is, for example, a motion camera, the data acquisition equipment mainly acquires image or video data in the motion process.

A reading element 20 is configured to, when it is detected that the gravity sensing value meets a preset condition, for example, the gravity sensing value is larger than or equal to a first preset threshold value, read data acquired by the first data acquisition equipment according to a predetermined sharing rule.

In an example embodiment, in the reading element 20, the preset condition is, for example, that the gravity sensing value is larger than or equal to the first preset threshold value, and in such an example, that the gravity sensing value meets the preset condition refers to that the gravity sensing value is larger than or equal to the first preset threshold value. Alternatively, the first preset threshold value may be set according to a received external input signal. The gravity sensing value in the motion process of the data acquisition equipment is detected in real time, the first preset threshold value is acquired, and the gravity sensing value detected in real time in the motion process of the data acquisition equipment is compared with the first preset threshold value.

In an example embodiment, the gravity sensing value includes: an acceleration value and/or a speed value.

In an example embodiment, when the gravity sensing value merely includes the acceleration value or the speed value, a standard for judging whether the gravity sensing value is larger than or equal to the first preset threshold value or not is: judging whether the acceleration value or the speed value is larger than or equal to the first preset threshold value or not.

In an example embodiment, when the gravity sensing value includes the acceleration value and the speed value, the first threshold value includes preset threshold values corresponding to the acceleration value and the speed value respectively, and at this moment, standards for judging whether the gravity sensing value is larger than or equal to the first preset threshold value or not are as follows: the first is judging whether any one of the gravity sensing value is larger than or equal to the corresponding preset threshold value or not and determining that the gravity sensing value is larger than or equal to the first preset threshold value when any one of the gravity sensing value is larger than or equal to the preset threshold value; and the second is judging whether each one of the gravity sensing value is larger than or equal to the corresponding preset threshold value or not and determining that the gravity sensing value is larger than or equal to the first preset threshold value when each one of the gravity sensing value is larger than or equal to the corresponding preset threshold value. For example, the data acquisition equipment is a motion camera, the preset threshold value includes, for example, an acceleration value of 3m/s² and a speed value of 15m/s, an acceleration value and speed value of the motion camera in a motion process are detected in real time in the motion process, the acceleration value may exceed the preset acceleration threshold value but the speed value does not exceed the preset speed threshold value in case of, for example, jumping, or the acceleration value may not exceed the preset acceleration threshold value but the speed value exceeds the preset speed threshold value in case of, for example, rapid sliding; it is determined that the gravity sensing value is larger than or equal to the first preset threshold value according to the first judgment standard, and it is determined that the gravity sensing value is smaller than the first preset threshold value according to the second judgment standard. Similarly, when the acceleration value exceeds the preset acceleration threshold value and the speed value exceeds the preset speed threshold value, it is determined that the gravity sensing value is larger than or equal to the first preset threshold value according to the second judgment standard. A type of the gravity sensing value to be detected and the judgment standard to be selected may both be determined according to a requirement of a practical condition. Preferably, selection of the type of the gravity sensing value or selection of the judgment standard may be implemented according to a received gravity sensing value type selection signal and judgment standard selection signal.

A sending element 30 is configured to send the data acquired by the first data acquisition equipment according to the predetermined sharing rule to any at least one piece of second data acquisition equipment in the data acquisition equipment group, wherein there is a pre-established data transmission channel between the second data acquisition equipment and the first data acquisition equipment.

In an example embodiment, before the sending element 30, the second data acquisition equipment establishes the data transmission channel with the first data acquisition equipment.

It is important to note here that the acquiring element 10, the reading element 20 and the sending element 30 may run in a monitoring terminal as a part of the device, functions realized by the modules may be executed by a processor in the monitoring terminal, and the monitoring terminal may also be terminal equipment such as a camera, an intelligent mobile phone (such as an Android mobile phone and an iOS mobile phone), a tablet computer, a palm computer, a Mobile Internet Device (MID) and a PAD.

In an example embodiment, the second data acquisition equipment and the first data acquisition equipment may be of the same type. For example, the second data acquisition equipment and the first data acquisition equipment are both motion cameras, the first data acquisition equipment shares the acquired data to the second data acquisition equipment according to the abovementioned method, and similarly, the second data acquisition equipment may share acquired data to the first data acquisition equipment according to a method similar to the data acquisition and transmission method of the first data acquisition equipment. In such a manner, the first data acquisition equipment and the second data acquisition equipment have image or video data acquired by the respective camera in continuous motion processes, and also have complete data acquired by the data acquisition equipment according to the sharing rule.

In an example embodiment, the second data acquisition equipment and the first data acquisition equipment may be of different types. For example, the first data acquisition equipment is a motion camera, while the second data acquisition equipment is, for example, a mobile terminal, the mobile terminal pre-establishes a connection with the second data acquisition equipment, the first data acquisition shares the acquired data to the mobile terminal according to the abovementioned method, and the mobile terminal may receive, store and even forward the received data.

In an example embodiment, the mobile terminal may forward the received data. When data transmission channels are established between every two of multiple pieces of data acquisition equipment, for example, the first data acquisition equipment is a motion camera; the second data acquisition equipment is also a motion camera, and establishes a data transmission channel with the first data acquisition equipment; and third data acquisition equipment is a mobile terminal, and establishes data transmission channels with the first data acquisition equipment and the second data acquisition equipment respectively. The first data acquisition equipment and the second data acquisition equipment mutually share the data acquired according to the abovementioned method, and the third data acquisition equipment receives the data acquired by the first data acquisition equipment and the second data acquisition equipment according to the abovementioned method. When the first data acquisition equipment or the second data acquisition equipment is confronted with relatively high pressure of processing such as data sending and receiving, the first data acquisition equipment and the second data acquisition equipment may select not to receive the data shared by the other party, and instead, share own acquired data to the mobile terminal, and the mobile terminal forwards the data shared by one party to the other party respectively.

In an example embodiment, the device for sharing the data between the data acquisition equipment according to embodiment 2 of the present disclosure further includes:
a selecting element 15, configured to receive a first input signal and select a sharing rule corresponding to the first input signal from multiple sharing rules pre-stored by multiple pieces of first data acquisition equipment.

Specifically, before the selecting element 15 selects the sharing rule, a plurality of sharing rules have been stored, and starting conditions and ending conditions for data acquisition of the data acquisition equipment, or data acquisition time lengths or the like may be specified in the sharing rules. For example, the sharing rules may include a first sharing rule, that is, the data is started to be acquired until the data acquisition time length reaches a preset time length when it is detected that the gravity sensing value is larger than or equal to the preset threshold value. For another example, the sharing rules may include a second sharing rule, that is, the first data acquisition equipment merely acquires data in a time period when the gravity sensing value is larger than or equal to the preset threshold value, and it may be considered that data acquisition time of the first data acquisition equipment starts from a time when the gravity sensing value is larger than or equal to the preset threshold value and ends at a time when the gravity sensing value is smaller than the preset threshold value in such a mode.

It is important to note here that the selecting element 15 may run in the monitoring terminal as a part of the device, a function realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, before the reading element 20 reads the data acquired by the first data acquisition equipment according to the predetermined sharing rule, the device for sharing the data between the data acquisition equipment further includes:
a first calling element 21, configured to control the first data acquisition equipment to call the predetermined sharing rule to acquire the data. Specifically, in the first calling element 21, the predetermined sharing rule called by the first data acquisition may have been uniquely determined at the start, and may also be selected according to the external signal in the selecting element 15.

It is important to note here that the first calling element 21 may run in the monitoring terminal as a part of the device, a function realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, the first calling element 21 further includes:
a first reading element 22, configured to read a preset time period when the first data acquisition equipment enters a first working mode.

In an example embodiment, in the first reading element 22, the first data acquisition equipment enters the first working mode according to the preset sharing rule when it is detected that the gravity sensing value meets the preset condition, for example, when the gravity sensing value is larger than or equal to the preset threshold value. Alternatively, the gravity sensing value detected in real time may be selected to compare with the preset threshold value in real time after entering the first working mode, the preset threshold value may be different from the first preset threshold value in the reading element 20 at this moment, and a specific operation of the first data acquisition equipment in the first working mode may be controlled according to a comparison result. Alternatively, the first data acquisition equipment may select not to compare the gravity sensing value detected in real time with the preset threshold value in real time after entering the first working mode. Preferably, the first data acquisition equipment cyclically detects whether the gravity sensing value is larger than or equal to the preset threshold value or not after quitting the first working mode, and enters the first working mode when detecting that the gravity sensing value is larger than or equal to the preset threshold value. Alternatively, the preset time period may be any preset time length, and modification, prolonging and the like may be performed on the preset time period according to the external input signal.

A first acquiring element 23 is configured to control the first data acquisition equipment to acquire data in the preset time period.

In an example embodiment, in the first acquiring element 23, the first data acquisition equipment acquires the data in the preset time period according to the sharing rule called by the first data acquisition equipment at this moment. Preferably, when the first data acquisition equipment is not in the first working mode and it is detected that the gravity sensing value meets the preset condition, for example, the gravity sensing value is larger than or equal to the preset threshold value, the first data acquisition equipment starts entering the first working mode and starts acquiring the data until the data acquisition time length reaches the preset time period.

It is important to note here that the first reading element 22 and the first acquiring element 23 may run in the monitoring terminal as a part of the device, functions realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, the first acquiring element 23 further includes:
a monitoring sub-element 24, configured to monitor a continuous time length of acquiring the data by the first data acquisition equipment; and
a first judging sub-element 25, configured to judge a magnitude relationship between the continuous time length of acquiring the by the first data acquisition equipment and a preset time period, wherein, when the continuous time length of acquiring the data by the first data acquisition equipment is smaller than the preset time period, the first data acquisition equipment continues acquiring the data till an ending moment of the time period, and when the continuous time length of acquiring the data by the first data acquisition equipment is larger than or equal to the preset time period, the first data acquisition equipment stops acquiring the data.

By the first acquiring element 23, the first data acquisition equipment acquires the data in the preset time period, for example, when the first data acquisition equipment is a motion camera, image or video information is acquired in the abovementioned manner. The first data acquisition equipment may also acquire the data in the preset time period in another alternative manner, for example, an image acquisition device in the first data acquisition equipment, such as the motion camera, continuously acquires the image information, and because the acquired image information includes timestamps, the first data acquisition equipment may acquire images of which timestamps are in the preset time period from the image acquisition device according to an acquisition starting time and the preset time period.

It is important to note here that the monitoring sub-element 24 and the first judging sub-element 25 may run in the monitoring terminal as a part of the device, functions realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, the first acquiring element 23 further includes:
a second judging sub-element 26, configured to judge in real time the magnitude relationship in the preset time period between the gravity sensing value of the first data acquisition equipment and a second preset threshold value, wherein the second preset threshold value is smaller than the first preset threshold value; and
a controlling sub-element 27, configured to, when the gravity sensing value of the first data acquisition equipment in the preset time period is smaller than or equal to the second preset threshold value, control in the preset time period the first data acquisition equipment to stop acquiring the data.

By the second judging sub-element 26 and the controlling sub-element 27, when the first data acquisition equipment works in the first working mode, a magnitude relationship between the gravity sensing value of the first data acquisition equipment and the second preset threshold value is detected in real time. When the gravity sensing value of the first data acquisition equipment is larger than or equal to the first preset threshold value, the first data acquisition equipment enters the first working mode and continuously acquires the data in the preset time period, and at this moment, when the data acquisition equipment is in the first working mode, the gravity sensing value of the first data acquisition equipment may be smaller than the first preset threshold value. Preferably, when the first data acquisition equipment is in the first working mode, if the real-time gravity sensing value of the first data acquisition equipment is smaller than the second preset threshold value, the first data acquisition equipment may be controlled to stop acquiring the data.

It is important to note here that the second judging sub-element 26 and the controlling sub-element 27 may run in the monitoring terminal as a part of the device, functions realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, before the reading element 20 reads the data acquired by the first data acquisition equipment according to the predetermined sharing rule, the device for sharing the data between the data acquisition equipment further includes:
a second calling element 28, configured to control the first data acquisition equipment to call a predetermined sharing rule to acquire the data. Specifically, in the second calling element 28, the predetermined sharing rule called by the first data acquisition equipment may be uniquely determined at the start, and may also be selected according to the external signal in the selecting element 15.

It is important to note here that the second calling element 28 may run in the monitoring terminal as a part of the device, a function realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

In an example embodiment, the second calling element 28 further includes:
a first recording element 291, configured to use the first data acquisition equipment to enter a second working mode to record a moment when the gravity sensing value meets the preset condition, for example, a moment when the gravity sensing value is larger than or equal to a first preset threshold value.

In an example embodiment, in Step S1054, since the gravity sensing value continuously changes under a normal condition, the moment when the gravity sensing value is larger than or equal to a first preset threshold value may be a time period with an unequal time length.

A second acquiring element 292 is configured to control the first data acquisition equipment to acquire the data at the moment when the gravity sensing value meets the preset condition, for example, the data at the moment when the gravity sensing value is larger than or equal to a first preset threshold value.

In an example embodiment, in the second acquiring element 292, the first data acquisition equipment merely shares the data, acquired by the first data acquisition equipment, at the moment when the gravity sensing value is larger than or equal to the first preset threshold value. For example, when the data acquisition equipment is a motion camera, in, for example, a jumping time period t1 from the 5th second to the 8th second and an accelerated sliding time period t2 from the 39th second to the 45th second, the gravity sensing value of the first data acquisition equipment is kept larger than or equal to the first preset threshold value, and then the first data acquisition equipment shares images and data in the time periods t1 and t2 to the other motion camera or the mobile terminal.

It is important to note here that the first recording element 291 and the second acquiring element 292 may run in the monitoring terminal as a part of the device, functions realized by the modules may be executed by the processor in the monitoring terminal, and the monitoring terminal may also be terminal equipment such as a camera, an intelligent mobile phone (such as an Android mobile phone and an iOS mobile phone), a tablet computer, a palm computer, an MID and a PAD.

### Embodiment 3

Embodiment 3 of the present disclosure further provides data acquisition equipment. It is important to note that the data acquisition equipment of the embodiment of the present disclosure executes a method for sharing data between data acquisition equipment provided by embodiment 1 of the present disclosure for data acquisition and sharing, and similarly, the data acquisition equipment of the embodiment of the present disclosure may also receive data shared by other data acquisition equipment according to the method for sharing the data between the data acquisition equipment provided by embodiment 1 of the present disclosure.

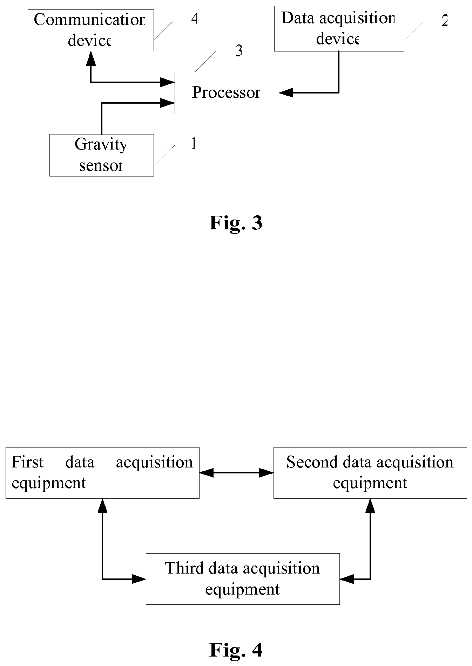

Fig. 3 is a structure diagram of data acquisition equipment according to embodiment 3 of the present disclosure. As shown in Fig. 3, the data acquisition equipment includes:
a gravity sensor 1, configured to detect in real time a gravity sensing value of the data acquisition equipment in motion, wherein the gravity sensing value preferably includes: an acceleration value and/or a speed value;
a data acquisition device 2, configured to acquire data according to a predetermined rule; and
a processor 3, receiving the gravity sensing value detected in real time by the gravity sensor 1 and reading the data acquired by the data acquisition device 2 according to the predetermined rule when it is detected that the gravity sensing value meets a preset condition, for example, the gravity sensing value is larger than or equal to a first preset threshold value.

In an example embodiment, when the gravity sensing value merely includes the acceleration value or the speed value, a standard for judging whether the gravity sensing value is larger than or equal to a first preset threshold value or not is: judging whether the acceleration value or the speed value is larger than or equal to the first preset threshold value or not.

In an example embodiment, when the gravity sensing value includes the acceleration value and the speed value, the first threshold value includes preset threshold values corresponding to the acceleration value and the speed value respectively, and at this moment, standards for judging whether the gravity sensing value is larger than or equal to the first preset threshold value or not are as follows: the first is judging whether any one of the gravity sensing value is larger than or equal to the corresponding preset threshold value or not and determining that the gravity sensing value is larger than or equal to the first preset threshold value when any one of the gravity sensing value is larger than or equal to the corresponding preset threshold value; and the second is judging whether each one of the gravity sensing value is larger than or equal to the corresponding preset threshold value or not and determining that the gravity sensing value is larger than or equal to the first preset threshold value when each one of the gravity sensing value is larger than or equal to the corresponding preset threshold value. For example, the data acquisition equipment is a motion camera, the preset threshold value includes, for example, an acceleration value of 3m/s² and a speed value of 15m/s. An acceleration value and speed value of the motion camera in a motion process are detected in real time in the motion process: the acceleration value may exceed the preset acceleration threshold value but the speed value does not exceed the preset speed threshold value in case of, for example, jumping; or the acceleration value may not exceed the preset acceleration threshold value but the speed value exceeds the preset speed threshold value in case of, for example, rapid sliding. It is determined that the gravity sensing value is larger than or equal to the first preset threshold value according to the first judgment standard, and it is determined that the gravity sensing value is smaller than the first preset threshold value according to the second judgment standard. Similarly, when the acceleration value exceeds the preset acceleration threshold value and the speed value exceeds the preset speed threshold value, it is determined that the gravity sensing value is larger than or equal to the first preset threshold value according to the second judgment standard. A type of the gravity sensing value to be detected and the judgment standard to be selected may both be determined according to a requirement of a practical condition. Preferably, selection of the type of the gravity sensing value or selection of the judgment standard may be implemented according to a received gravity sensing value type selection signal and judgment standard selection signal.

The processor 3 is further configured to receive a first input signal and select a sharing rule corresponding to the first input signal from multiple sharing rules pre-stored by multiple pieces of first data acquisition equipment.

The processor 3 is further configured to call one of the predetermined sharing rules to acquire data. Specifically, the first data acquisition equipment acquires a preset time period according to the predetermined sharing rule, and when it is detected that the gravity sensing value is larger than or equal to the preset threshold value, enters a first working mode and starts acquiring the data until a time length of acquiring the data reaches the preset time period.

The processor 3 is further configured to call one of the predetermined sharing rules to acquire the data. Specifically, the first data acquisition equipment records, according to the predetermined sharing rule, a moment when the gravity sensing value is larger than or equal to the first preset threshold value, and acquires data at the moment when the gravity sensing value is larger than or equal to the first preset threshold value.

A communication device 4 is configured to send the data read by the processor to other data acquisition equipment through a pre-established data transmission channel.

In an example embodiment, the communication device 4 is further configured to receive data shared by other data acquisition equipment. Any two pieces of data acquisition equipment establish a data transmission channel through communication devices 4.

In an example embodiment, the data acquisition equipment further includes: a memory, configured to store the data acquired by the data acquisition device 2 according to the predetermined rule. The memory is further configured to store the data shared by the other data acquisition equipment.

In an example embodiment, the other data acquisition equipment in the embodiment may be equipment the same as the first data acquisition equipment, and may also be a mobile terminal. For example, when the first data acquisition equipment and the other data acquisition equipment are both motion cameras, the first data acquisition equipment shares the acquired data to the second data acquisition equipment according to the abovementioned method, and similarly, the second data acquisition equipment may share acquired data to the first data acquisition equipment according to a method similar to the data acquisition and transmission method of the first data acquisition equipment. In such a manner, the first data acquisition equipment and the second data acquisition equipment have image or video data acquired by respective camera in continuous motion processes, and also have complete data acquired by the data acquisition equipment according to the sharing rule. For another example, when the first data acquisition equipment is a motion camera while the other data acquisition equipment includes a mobile terminal, the mobile terminal pre-establishes a connection with the second data acquisition equipment, the first data acquisition shares the acquired data to the mobile terminal according to the abovementioned method, and the mobile terminal may receive, store and even forward the received data.

### Embodiment 4

Embodiment 4 of the present disclosure further provides a system for sharing data between data acquisition equipment. It is important to note that the system for sharing the data between the data acquisition equipment in the embodiment of the present disclosure may include at least one piece of data acquisition equipment in embodiment 3 of the present disclosure, and the data acquisition equipment may interact according to a method for sharing the data in embodiment 1 of the present disclosure. The system for sharing the data between the data acquisition equipment includes:
first data acquisition equipment, configured to detect in real time a gravity sensing value in a motion process and read data acquired by the first data acquisition equipment according to a predetermined sharing rule when it is detected that the gravity sensing value meets a preset condition, for example, the gravity sensing value is larger than or equal to a first preset threshold value, wherein the first data acquisition equipment is anyone piece of data acquisition equipment in a data acquisition equipment group; and
any at least one piece of second data acquisition equipment, pre-establishing a data transmission channel with the first data acquisition equipment and configured to receive the data acquired by the first data acquisition equipment according to the sharing rule.

Fig. 4 is a schematic diagram of a system for sharing data between data acquisition equipment according to embodiment 4 of the present disclosure. As shown in Fig. 4, the system for sharing the data between the data acquisition equipment includes three pieces of data acquisition equipment, wherein the first data acquisition equipment is, for example, a motion camera, the second data acquisition equipment is, for example, a motion camera, the third data acquisition equipment is, for example, a mobile terminal, the first data acquisition equipment and the second data acquisition equipment acquire and share data according to the method provided by embodiment 1 of the present disclosure, and the third data acquisition equipment receives the data sent by the first data acquisition equipment and the second data acquisition equipment, may send the data sent by the first data acquisition equipment to the second data acquisition equipment, and may also send the data sent by the second data acquisition equipment to the first data acquisition equipment.

Each function element provided by the embodiment of the present disclosure may run in a monitoring terminal, a computer terminal or a similar arithmetic device, and may also be stored as a part of a storage medium.

Therefore, the embodiment of the present disclosure may provide a monitoring terminal, which may be any piece of monitoring terminal equipment in a monitoring terminal group. Alternatively, in the embodiment, the monitoring terminal may be a camera and may also be replaced with terminal equipment such as a mobile terminal.

Alternatively, in the embodiment, the monitoring terminal may be located in at least one piece of network equipment in multiple pieces of network equipment of a monitoring network.

In the embodiment, the monitoring terminal may execute program codes of the following steps in a method for sharing data between data acquisition equipment: a gravity sensing value detected in real time by first data acquisition equipment in motion is acquired, wherein the first data acquisition equipment is anyone piece of data acquisition equipment in a data acquisition equipment group; when it is detected that the gravity sensing value meets a preset condition, data acquired by the first data acquisition equipment is read according to a predetermined sharing rule; and the data acquired by the first data acquisition equipment according to the sharing rule is sent to any at least one piece of second data acquisition equipment in the data acquisition equipment group, wherein there is a pre-established data transmission channel between the second data acquisition equipment and the first data acquisition equipment.

Alternatively, the monitoring terminal may include: one or more processors, a memory and a transmission device.

Wherein, the memory may be configured to store a software program and a module, such as a program instruction/module corresponding to the method and system for sharing the data between the data acquisition equipment in the embodiments of the present disclosure. The processor runs the software program and module stored in the memory, thereby executing various function applications and data processing, namely implementing the method for sharing the data between the data acquisition equipment. The memory may include a high-speed Random Access Memory (RAM), and may also include a nonvolatile memory, such as one or more magnetic storage devices, flash memories or other nonvolatile solid-state memories. In some embodiments, the memory may further include memories remotely arranged relative to the processor, and these remote memories may be connected to the terminal through a network. An example of the network includes, but not limited to, the Internet, an intranet of an enterprise, a local area network, a mobile communication network and a combination thereof.

The transmission device is configured to receive or send data through a network. A specific example of the network may include a wired network and a wireless network. In an example, the transmission device includes a Network Interface Controller (NIC), which may be connected with other network equipment and a router through a network cable, thereby communicating with the Internet or a local area network. In an example, the transmission device is a Radio Frequency (RF) module, which is configured to communicate with the Internet in a wireless manner.

In an example embodiment, the memory is specifically configured to store a preset operating condition, information of a preset permitted user and an application program.

The processor may call the information and application program stored by the memory through the transmission device to execute the program codes of the steps of the method in each alternative or preferred embodiment in the method embodiment.

Those skilled in the art should know that the monitoring terminal may also be terminal equipment such as an intelligent mobile phone (such as an Android mobile phone and an iOS mobile phone), a tablet computer, a palm computer, an MID and a PAD.

Those skilled in the art should know that all or part of the steps in various methods of the abovementioned embodiment may be implement by instructing related hardware of terminal equipment by a program, the program may be stored in a storage medium readable for a monitoring terminal, and the storage medium may include: a flash disk, a Read-Only Memory (ROM), a RAM, a magnetic disk, an optical disk or the like.

The embodiment of the present disclosure further provides a storage medium. Alternatively, in the embodiment, the storage medium may be configured to store program codes executed by the method for sharing the data between the data acquisition equipment provided by the equipment, method and device embodiments and the system embodiment.

Alternatively, in the embodiment, the storage medium may be located in any monitoring terminal in a monitoring terminal group in a monitoring network, or located in any mobile terminal in a mobile terminal group.

Alternatively, in the embodiment, the storage medium is configured to store the program codes configured to execute the following steps: a gravity sensing value detected in real time by first data acquisition equipment in motion is acquired, wherein the first data acquisition equipment is anyone piece of data acquisition equipment in a data acquisition equipment group; when it is detected that the gravity sensing value meets a preset condition, data acquired by the first data acquisition equipment according to a predetermined sharing rule is read; and the data acquired by the first data acquisition equipment according to the sharing rule is sent to any at least one piece of second data acquisition equipment in the data acquisition equipment group, wherein there is a pre-established data transmission channel between the second data acquisition equipment and the first data acquisition equipment.

Alternatively, in the embodiment, the storage medium may further be configured to store program codes for various preferred or alternative method steps provided by the method for sharing the data between the data acquisition equipment.

The data acquisition equipment and the method and system for sharing the data between the data acquisition equipment according to the present disclosure are described above with reference to the drawings with examples. However, those skilled in the art should know that various improvements to the data acquisition equipment and the method and system for sharing the data between the data acquisition equipment disclosed in the present disclosure may further be made without departing from the contents of the present disclosure. Therefore, the scope of protection of the present disclosure shall be determined according to contents of the appended claims.

It is important to note that each abovementioned method embodiment is expressed as a combination of a series of operations to simplify descriptions, but those skilled in the art should know that the present disclosure is not limited to a sequence of the described operations because some steps may be executed in another sequence or at the same time according to the present disclosure. Second, those skilled in the art should also know that the embodiments described in the specification belong to preferred embodiments and involved operations and modules are not necessary to the present disclosure.

Each embodiment in the abovementioned embodiments is described with different emphases, and parts which are not elaborated in a certain embodiment may refer to related descriptions of the other embodiments.

In some embodiments provided by the present disclosure, it should be understood that the disclosed device may be implemented in another manner. For example, the device embodiment described above is merely schematic, and for example, division of the elements is merely logic function division, and other division manners may be adopted during practical implementation. For example, multiple units or components may be combined or integrated into another system, or some characteristics may be neglected or not executed. In addition, coupling or direct coupling or communication connection between the displayed or discussed components may be indirect coupling or communication connection, implemented through some interfaces, of the device or the units, and may be electrical or adopt other forms.

The abovementioned units described as separate parts may or may not be physically separated, and parts displayed as units may or may not be physical units, and namely may be located in the same place, or may also be distributed to multiple network units. Part or all of the units may be selected to achieve the purpose of the solutions of the present disclosure according to a practical requirement.

In addition, each function element in each embodiment of the present disclosure may be integrated into a processing unit, each unit may also exist independently, and two or more than two element may also be integrated into a element. The abovementioned integrated element may be implemented in a hardware form, and may be implemented in form of hardware, and may also be implemented in form of software function element.

When being implemented in form of software function unit and sold or used as an independent product, the integrated unit may be stored in a computer-readable storage medium. Based on such an understanding, the technical solutions of the present disclosure substantially or parts making contributions to the related art or all or part of the technical solutions may be embodied in form of software product, and the computer software product is stored in a storage medium, including a plurality of instructions configured to enable computer equipment (which may be a personal computer, a mobile terminal, a server, network equipment or the like) to execute all or part of the method in each embodiment of the present disclosure. The abovementioned storage medium includes: various media capable of storing program codes such as a U disk, a ROM, a RAM, a mobile hard disk, a magnetic disk or an

When being implemented in form of software function unit and sold or used as an independent product, the integrated unit may be stored in a computer-readable storage medium. Based on such an understanding, the technical solutions of the present disclosure substantially or parts making contributions to the related art or all or part of the technical solutions may be embodied in form of software product, and the computer software product is stored in a storage medium, including a plurality of instructions configured to enable computer equipment (which may be a personal computer, a mobile terminal, a server, network equipment or the like) to execute all or part of the method in each embodiment of the present disclosure. The abovementioned storage medium includes: various media capable of storing program codes such as a U disk, a ROM, a RAM, a mobile hard disk, a magnetic disk or an optical disk.

The above is merely the preferred embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection of the disclosure.

## Claims

1. A method for sharing data between data acquisition equipment, comprising:
acquiring a gravity sensing value detected in real time by first data acquisition equipment in motion, wherein the first data acquisition equipment is anyone piece of data acquisition equipment in a data acquisition equipment group;
when it is detected that the gravity sensing value meets a preset condition, reading data acquired by the first data acquisition equipment according to a predetermined sharing rule; and
sending the data acquired by the first data acquisition equipment according to the sharing rule to any at least one piece of second data acquisition equipment in the data acquisition equipment group, wherein there is a pre-established data transmission channel between the second data acquisition equipment and the first data acquisition equipment, wherein, the first data acquisition equipment shares the acquired data to the second data acquisition equipment, and similarly, the second data acquisition equipment shares acquired data to the first data acquisition equipment according to a method similar to the data acquisition and transmission method of the first data acquisition equipment.

2. The method as claimed in claim 1, before reading the data acquired by the first data acquisition equipment according to the predetermined rule, the method further comprising:
calling, by the first data acquisition equipment, the predetermined sharing rule to acquire the data.

3. The method as claimed in claim 2, wherein the step of calling, by the first data acquisition equipment, the predetermined sharing rule to acquire the data comprises:
using the first data acquisition equipment to enter a first working mode to read a preset time period; and
controlling the first data acquisition equipment to acquire data in the preset time period.

4. The method as claimed in claim 3, wherein the step of controlling the first data acquisition equipment to acquire the data in the preset time period comprises:
monitoring a continuous time length of acquiring data by the first data acquisition equipment;
when the continuous time length of acquiring the data by the first data acquisition equipment is smaller than the preset time period, using the first data acquisition equipment to continue acquiring the data till an ending moment when the continuous time length reaches the preset time period; and
when the continuous time length of acquiring the data by the first data acquisition equipment is larger than or equal to the preset time period, using the first data acquisition equipment to stop acquiring the data.

5. The method as claimed in claim 3, wherein the step of controlling the first data acquisition equipment to acquire the data in the preset time period when the preset condition is that the gravity sensing value is larger than or equal to a first preset threshold value comprises:
detecting in real time whether the gravity sensing value of the first data acquisition equipment in the preset time period is larger than or equal to a second preset threshold value or not, wherein the second preset threshold value is smaller than the first preset threshold value; and
when the gravity sensing value of the first data acquisition equipment in the preset time period is smaller than or equal to the second preset threshold value, using the first data acquisition equipment to stop acquiring the data.

6. The method as claimed in claim 2, wherein the step of calling, by the first data acquisition equipment, the predetermined sharing rule to acquire the data comprises:
using the first data acquisition equipment to enter a second working mode;
recording a moment when the gravity sensing value meets the preset condition; and
controlling the first data acquisition equipment to acquire data at the moment when the gravity sensing value meets the preset condition.

7. The method as claimed in claim 1, wherein the gravity sensing value comprises: an acceleration value and/or a speed value.

8. Data acquisition equipment, comprising:
a gravity sensor, configured to detect in real time a gravity sensing value of the data acquisition equipment in motion;
a data acquisition device, configured to acquire data according to a predetermined rule;
a processor, receiving the gravity sensing value detected in real time by the gravity sensor and reading the data acquired by the data acquisition device according to the predetermined rule when it is detected that the gravity sensing value meets a preset condition; and
a communication device, configured to send the data read by the processor to other data acquisition equipment through a pre-established data transmission channel;
wherein, the data acquisition equipment shares the acquired data to the other data acquisition equipments, and similarly, the other data acquisition equipments shares acquired data to the data acquisition equipment according to a method similar to the data acquisition and transmission method of the data acquisition equipment.

9. The equipment as claimed in claim 8, wherein the gravity sensing value comprises an acceleration value and/or a speed value.

10. The equipment as claimed in claim 8, wherein the communication device is further configured to receive data shared by said other data acquisition equipment.

11. The equipment as claimed in claim 8, the data acquisition device further comprising:
a memory, configured to store the data acquired by the data acquisition device according to the predetermined rule.

12. The equipment as claimed in claim 8, wherein the processor is further configured to receive a first input signal and select, from multiple pre-stored sharing rules, a sharing rule corresponding to the first input signal.

13. The equipment as claimed in claim 11, wherein the memory is further configured to store data shared by said other data acquisition equipment.

14. A system for sharing data between data acquisition equipment, comprising:
first data acquisition equipment, configured to detect in real time a gravity sensing value in a motion process and read data acquired by the first data acquisition equipment according to a predetermined sharing rule when it is detected that the gravity sensing value meets a preset condition, wherein the first data acquisition equipment is anyone piece of data acquisition equipment in a data acquisition equipment group; and
any at least one piece of second data acquisition equipment, pre-establishing a data transmission channel with the first data acquisition equipment and configured to receive the data acquired by the first data acquisition equipment according to the sharing rule;
wherein, the first data acquisition equipment shares the acquired data to the second data acquisition equipment, and similarly, the second data acquisition equipment shares acquired data to the first data acquisition equipment according to a method similar to the data acquisition and transmission method of the first data acquisition equipment.

15. A monitoring terminal, configured to execute program codes of the steps provided by the method for sharing the data between the data acquisition equipment as claimed in any one of claims 1-7.

16. A storage medium, configured to store program codes of the steps provided by the method for sharing the data between the data acquisition equipment as claimed in any one of claims 1-7.

## Patentansprüche

1. Verfahren zur gemeinsamen Datennutzung durch Datenerfassungsausrüstungen, umfassend:
Erfassen eines Schwerpunkt-Abtastwertes, der in Echtzeit von einer ersten Datenerfassungsausrüstung in Bewegung detektiert wird, wobei die erste Datenerfassungsausrüstung irgendein Teil einer Datenerfassungsausrüstung in einer Datenerfassungsausrüstungsgruppe ist;
wenn detektiert wird, dass der Schwerpunkt-Abtastwert eine zuvor eingestellte Bedingung erfüllt, Lesen von Daten, die von der ersten Datenerfassungsausrüstung erfasst werden, entsprechend einer zuvor bestimmten Regel zur gemeinsamen Nutzung; und
Senden der Daten, die von der ersten Datenerfassungsausrüstung erfasst werden, entsprechend der Regel zur gemeinsamen Nutzung zu mindestens irgendeinem Teil einer zweiten Datenerfassungsausrüstung in der Datenerfassungsausrüstungsgruppe, wobei ein zuvor festgelegter Datenübertragungskanal zwischen der zweiten Datenerfassungsausrüstung und der ersten Datenerfassungsausrüstung vorhanden ist,
wobei die erste Datenerfassungsausrüstung die erfassten Daten mit der zweiten Datenerfassungsausrüstung gemeinsam nutzt, und die zweite Datenerfassungsausrüstung die erfassten Daten in ähnlicher Weise mit der ersten Datenerfassungsausrüstung entsprechend einem Verfahren gemeinsam nutzt, das dem Datenerfassungs- und übetragungsverfahren der ersten Datenerfassungsausrüstung ähnlich ist.

2. Verfahren nach Anspruch 1, wobei das Verfahren vor dem Lesen der Daten, die von der ersten Datenerfassungsausrüstung entsprechend der zuvor bestimmten Regel erfasst werden, umfasst:
Aufrufen der zuvor festgelegten Regel zur gemeinsamen Nutzung zum Erfassen der Daten durch die erste Datenerfassungsausrüstung.

3. Verfahren nach Anspruch 2, wobei der Schritt des Aufrufens der zuvor festgelegten Regel zur gemeinsamen Nutzung zum Erfassen der Daten durch die erste Datenerfassungsausrüstung umfasst:
Verwenden der ersten Datenerfassungsausrüstung zum Eingeben eines ersten Arbeitsmodus zum Lesen eines zuvor eingestellten Zeitraums; und
Steuern der ersten Datenerfassungsausrüstung zum Erfassen von Daten in dem zuvor eingestellten Zeitraum.

4. Verfahren nach Anspruch 3, wobei der Schritt des Steuerns der ersten Datenerfassungsausrüstung zum Erfassen der Daten in dem zuvor eingestellten Zeitraum umfasst:
Überwachen einer durchgehenden Zeitdauer des Erfassens von Daten durch die erste Datenerfassungsausrüstung;
wenn die durchgehende Zeitdauer des Erfassens der Daten durch die erste Datenerfassungsausrüstung kürzer ist, als der zuvor eingestellte Zeitraum, Verwenden der ersten Datenerfassungsausrüstung zum Fortsetzen des Erfassens der Daten bis zu einem Endzeitpunkt, wenn die durchgehende Zeitdauer den zuvor eingestellten Zeitraum erreicht; und
wenn die durchgehende Zeitdauer des Erfassens der Daten durch die erste Datenerfassungsausrüstung größer als oder gleich dem zuvor eingestellten Zeitraum ist, Verwenden der ersten Datenerfassungsausrüstung zum Anhalten des Erfassens der Daten.

5. Verfahren nach Anspruch 3, wobei der Schritt des Steuerns der ersten Datenerfassungsausrüstung zum Erfassen der Daten in dem zuvor eingestellten Zeitraum, wenn die zuvor eingestellte Bedingung jene ist, dass der Schwerpunkt-Abtastwert größer als oder gleich einem ersten zuvor eingestellten Schwellenwert ist, umfasst:
Detektieren in Echtzeit, ob der Schwerpunkt-Abtastwert der ersten Datenerfassungsausrüstung in dem zuvor eingestellten Zeitraum größer als oder gleich einem zweiten zuvor eingestellten Schwellenwert ist oder nicht, wobei der zweite zuvor eingestellte Schwellenwert kleiner ist, als der erste zuvor eingestellte Schwellenwert; und
wenn der Schwerpunkt-Abtastwert der ersten Datenerfassungsausrüstung in dem zuvor eingestellten Zeitraum kleiner als oder gleich dem zweiten zuvor eingestellten Schwellenwert ist, Verwenden der ersten Datenerfassungsausrüstung zum Stoppen des Erfassens der Daten.

6. Verfahren nach Anspruch 2, wobei der Schritt des Aufrufens der zuvor bestimmten Regel zur gemeinsamen Nutzung zum Erfassen der Daten durch die erste Datenerfassungsausrüstung umfasst:
Verwenden der ersten Datenerfassungsausrüstung zum Eingeben eines zweiten Arbeitsmodus;
Aufzeichnen eines Zeitpunkts, wenn der Schwerpunkt-Abtastwert die zuvor eingestellte Bedingung erfüllt; und
Steuern der ersten Datenerfassungsausrüstung zum Erfassen von Daten zu dem Zeitpunkt, wenn der Schwerpunkt-Abtastwert die zuvor eingestellte Bedingung erfüllt.

7. Verfahren nach Anspruch 1, wobei der Schwerpunkt-Abtastwert umfasst: einen Beschleunigungswert und/ oder einen Geschwindigkeitswert.

8. Datenerfassungsausrüstung, umfassend:
einen Schwerpunktsensor, konfiguriert zum Detektieren in Echtzeit eines Schwerpunkt-Abtastwerts der Datenerfassungsausrüstung in Bewegung;
eine Datenerfassungsvorrichtung, konfiguriert zum Erfassen von Daten entsprechend einer zuvor bestimmten Regel;
einen Prozessor, der den Schwerpunkt-Abtastwert, der in Echtzeit durch den Schwerpunktsensor detektiert wird, empfängt, und die durch die Datenerfassungsvorrichtung entsprechend der zuvor bestimmten Regel erfassten Daten liest, wenn detektiert wird, dass der Schwerpunkt-Abtastwert eine zuvor eingestellte Bedingung erfüllt; und
eine Kommunikationsvorrichtung, konfiguriert zum Senden der Daten, die von dem Prozessor gelesen werden, zu einer anderen Datenerfassungsausrüstung durch einen zuvor festgelegten Datenübertragungskanal hindurch;
wobei die Datenerfassungsausrüstung die erfassten Daten mit der anderen Datenerfassungsausrüstung gemeinsam nutzt, und die andere Datenerfassungsausrüstung die erfassten Daten in ähnlicher Weise mit der Datenerfassungsausrüstung entsprechend einem Verfahren gemeinsam nutzt, das dem Datenerfassungs- und übetragungsverfahren der Datenerfassungsausrüstung ähnlich ist.

9. Ausrüstung nach Anspruch 8, wobei der Schwerpunkt-Abtastwert einen Beschleunigungswert und/ oder einen Geschwindigkeitswert umfasst.

10. Ausrüstung nach Anspruch 8, wobei die Kommunikationsvorrichtung weiter konfiguriert ist, um Daten zu empfangen, die von der anderen Datenerfassungsausrüstung gemeinsam genutzt werden.

11. Ausrüstung nach Anspruch 8, wobei die Datenerfassungsvorrichtung weiter umfasst:
einen Speicher, konfiguriert zum Ablegen der Daten, die durch die Datenerfassungsvorrichtung entsprechend der zuvor bestimmten Regel erfasst worden sind.

12. Ausrüstung nach Anspruch 8, wobei der Prozessor weiter konfiguriert ist, um ein erstes Eingangssignal zu empfangen, und aus den mehreren zuvor abgelegten Regeln zur gemeinsamen Nutzung eine Regel zur gemeinsamen Nutzung auszuwählen, die dem ersten Eingangssignal entspricht.

13. Ausrüstung nach Anspruch 11, wobei der Speicher weiter konfiguriert ist, um Daten abzulegen, die von der anderen Datenerfassungsausrüstung gemeinsam genutzt wird.

14. System zur gemeinsamen Datennutzung durch Datenerfassungsausrüstungen, umfassend:
eine erste Datenerfassungsausrüstung, konfiguriert zum Detektieren in Echtzeit eines Schwerpunkt-Abtastwerts in einem Bewegungsprozess und Lesen von Daten, die von der ersten Datenerfassungsausrüstung entsprechend einer zuvor festgelegten Regel erfasst werden, wenn detektiert wird, dass der Schwerpunkt-Abtastwert eine zuvor eingestellte Bedingung erfüllt, wobei die erste Datenerfassungsausrüstung irgendein Teil einer Datenerfassungsausrüstung in einer Datenerfassungsausrüstungsgruppe ist; und
wobei mindestens irgendein Teil einer zweiten Datenerfassungsausrüstung zuvor einen Datenübertragungskanal mit der ersten Datenerfassungsausrüstung festlegt und konfiguriert ist, um die Daten zu empfangen, die durch die erste Datenerfassungsausrüstung entsprechend der Regel zur gemeinsamen Nutzung erfasst werden;
wobei die erste Datenerfassungsausrüstung die erfassten Daten gemeinsam mit der zweiten Datenerfassungsausrüstung nutzt, und die zweite Datenerfassungsausrüstung die erfassten Daten in ähnlicher Weise mit der ersten Datenerfassungsausrüstung entsprechend einem Verfahren gemeinsam nutzt, das dem Datenerfassungs- und übetragungsverfahren der ersten Datenerfassungsausrüstung ähnlich ist.

15. Überwachungsendgerät, konfiguriert zum Ausführen von Programmcodes der Schritte, die durch das Verfahren zur gemeinsamen Datennutzung durch Datenerfassungsausrüstungen nach einem der Ansprüche 1 bis 7 bereitgestellt werden.

16. Ablagemedium, konfiguriert zum Ablegen von Programmcodes der Schritte, die durch das Verfahren zur gemeinsamen Datennutzung durch Datenerfassungsausrüstungen nach einem der Ansprüche 1 bis 7 bereitgestellt werden.

## Revendications

1. Procédé de partage de données entre des équipements d'acquisition de données, comprenant :
l'acquisition d'une valeur de détection de gravité détectée en temps réel par un premier équipement d'acquisition de données en mouvement, dans lequel le premier équipement d'acquisition de données est une unité quelconque d'équipement d'acquisition de données dans un groupe d'équipements d'acquisition de données ;
lorsqu'il est détecté que la valeur de détection de gravité satisfait une condition préétablie, la lecture de données acquises par le premier équipement d'acquisition de données selon une règle de partage prédéterminée ; et
l'envoi des données acquises par le premier équipement d'acquisition de données selon la règle de partage à une quelconque au moins une unité d'un second équipement d'acquisition de données dans le groupe d'équipements d'acquisition de données, dans lequel il y a un canal de transmission de données préétabli entre le second équipement d'acquisition de données et le premier équipement d'acquisition de données,
dans lequel, le premier équipement d'acquisition de données partage les données acquises avec le second équipement d'acquisition de données, et de la même façon, le second équipement d'acquisition de données partage des données acquises avec le premier équipement d'acquisition de données selon un procédé similaire au procédé d'acquisition et de transmission de données du premier équipement d'acquisition de données.

2. Procédé selon la revendication 1, avant la lecture des données acquises par le premier équipement d'acquisition de données selon la règle prédéterminée, le procédé comprenant en outre :
l'appel, par le premier équipement d'acquisition de données, de la règle de partage prédéterminée pour acquérir les données.

3. Procédé selon la revendication 2, dans lequel l'étape d'appel, par le premier équipement d'acquisition de données, de la règle de partage prédéterminée pour acquérir les données comprend :
l'utilisation du premier équipement d'acquisition de données pour entrer dans un premier mode de fonctionnement afin de lire une période de temps préétablie ; et
la commande du premier équipement d'acquisition de données pour acquérir des données pendant la période de temps préétablie.

4. Procédé selon la revendication 3, dans lequel l'étape de commande du premier équipement d'acquisition de données pour acquérir les données pendant la période de temps préétablie comprend :
la surveillance d'une durée continue d'acquisition de données par le premier équipement d'acquisition de données ;
lorsque la durée continue d'acquisition des données par le premier équipement d'acquisition de données est inférieure à la période de temps préétablie, l'utilisation du premier équipement d'acquisition de données pour continuer d'acquérir les données jusqu'à un moment de fin où la durée continue atteint la période de temps préétablie ; et
lorsque la durée continue d'acquisition des données par le premier équipement d'acquisition de données est supérieure ou égale à la période de temps préétablie, l'utilisation du premier équipement d'acquisition de données pour arrêter d'acquérir les données.

5. Procédé selon la revendication 3, dans lequel l'étape de commande du premier équipement d'acquisition de données pour acquérir les données pendant la période de temps préétablie lorsque la condition préétablie est que la valeur de détection de gravité est supérieure ou égale à une première valeur seuil préétablie comprend :
le fait de détecter en temps réel si la valeur de détection de gravité du premier équipement d'acquisition de données pendant la période de temps préétablie est supérieure ou égale à une seconde valeur seuil préétablie ou non, dans lequel la seconde valeur seuil préétablie est inférieure à la première valeur seuil préétablie ; et
lorsque la valeur de détection de gravité du premier équipement d'acquisition de données pendant la période de temps préétablie est inférieure ou égale à la seconde valeur seuil préétablie, l'utilisation du premier équipement d'acquisition de données pour arrêter d'acquérir les données.

6. Procédé selon la revendication 2, dans lequel l'étape d'appel, par le premier équipement d'acquisition de données, de la règle de partage prédéterminée pour acquérir les données comprend :
l'utilisation du premier équipement d'acquisition de données pour entrer dans un second mode de fonctionnement ;
l'enregistrement d'un moment où la valeur de détection de gravité satisfait la condition préétablie ; et
la commande du premier équipement d'acquisition de données pour acquérir des données au moment où la valeur de détection de gravité satisfait la condition préétablie.

7. Procédé selon la revendication 1, dans lequel la valeur de détection de gravité comprend : une valeur d'accélération et/ou une valeur de vitesse.

8. Equipements d'acquisition de données, comprenant :
un capteur de gravité, configuré pour détecter en temps réel une valeur de détection de gravité de l'équipement d'acquisition de données en mouvement ;
un dispositif d'acquisition de données, configuré pour acquérir des données selon une règle prédéterminée ;
un processeur, recevant la valeur de détection de gravité détectée en temps réel par le capteur de gravité et lisant les données acquises par le dispositif d'acquisition de données selon la règle prédéterminée lorsqu'il est détecté que la valeur de détection de gravité satisfait une condition préétablie ; et
un dispositif de communication, configuré pour envoyer les données lues par le processeur à un autre équipement d'acquisition de données par le biais d'un canal de transmission de données préétabli ;
dans lesquels, l'équipement d'acquisition de données partage les données acquises avec l'autre équipement d'acquisition de données, et de la même façon, l'autre équipement d'acquisition de données partage des données acquises avec l'équipement d'acquisition de données selon un procédé similaire au procédé d'acquisition et de transmission de données de l'équipement d'acquisition de données.

9. Equipements selon la revendication 8, dans lesquels la valeur de détection de gravité comprend une valeur d'accélération et/ou une valeur de vitesse.

10. Equipements selon la revendication 8, dans lesquels le dispositif de communication est en outre configuré pour recevoir des données partagées par ledit autre équipement d'acquisition de données.

11. Equipements selon la revendication 8, le dispositif d'acquisition de données comprenant en outre :
une mémoire, configurée pour stocker les données acquises par le dispositif d'acquisition de données selon la règle prédéterminée.

12. Equipements selon la revendication 8, dans lesquels le processeur est en outre configuré pour recevoir un premier signal d'entrée et sélectionner, parmi de multiples règles de partage préstockées, une règle de partage correspondant au premier signal d'entrée.

13. Equipements selon la revendication 11, dans lesquels la mémoire est en outre configurée pour stocker des données partagées par ledit autre équipement d'acquisition de données.

14. Système de partage de données entre des équipements d'acquisition de données, comprenant :
un premier équipement d'acquisition de données, configuré pour détecter en temps réel une valeur de détection de gravité dans un processus de mouvement et lire des données acquises par le premier équipement d'acquisition de données selon une règle de partage prédéterminée lorsqu'il est détecté que la valeur de détection de gravité satisfait une condition préétablie, dans lequel le premier équipement d'acquisition de données est une unité quelconque d'équipement d'acquisition de données dans un groupe d'équipements d'acquisition de données ; et
une quelconque au moins une unité d'un second équipement d'acquisition de données, préétablissant un canal de transmission de données avec le premier équipement d'acquisition de données et configurée pour recevoir les données acquises par le premier équipement d'acquisition de données selon la règle de partage ;
dans lequel, le premier équipement d'acquisition de données partage les données acquises avec le second équipement d'acquisition de données, et de la même façon, le second équipement d'acquisition de données partage des données acquises avec le premier équipement d'acquisition de données selon un procédé similaire au procédé d'acquisition et de transmission de données du premier équipement d'acquisition de données.

15. Terminal de surveillance, configuré pour exécuter des codes de programme des étapes prévues par le procédé de partage des données entre les équipements d'acquisition de données selon l'une quelconque des revendications 1 à 7.

16. Support de stockage, configuré pour stocker des codes de programme des étapes prévues par le procédé de partage des données entre les équipements d'acquisition de données selon l'une quelconque des revendications 1 à 7.
